# EUROPEAN PATENT APPLICATION

(11) **EP 3 460 791 A1**
(43) Date of publication of application: **27.03.2019**
(21) Application number: 17798924.1
(22) Date of filing: 09.02.2017
(51) Int. Cl.: G10L 13/08, G06F 3/01, G06F 3/16, G10L 13/00, G10L 15/10, G10L 15/22

(54) **INFORMATION PROCESSING DEVICE**

(30) Priority: 16.05.2016 JP 2016098136
(71) Applicant: Sony Corporation, Tokyo 108-0075 (JP)
(72) Inventor: OGAWA, Hiroaki, Tokyo 108-0075 (JP); TOUYAMA, Keisuke, Tokyo 108-0075 (JP)
(74) Representative: MFG Patentanwälte Meyer-Wildhagen Meggle-Freund Gerhard PartG mbB
(86) International application number: PCT/JP2017/004825
(87) International publication number: WO 2017/199486

(57) **Abstract**

[Object] To perform a more natural response corresponding to the speech of the user.

[Solution] Provided is an information processing apparatus, including: an acquiring unit configured to collect speech information; a transmitting unit configured to transmit recognition information based on the speech information; a receiving unit configured to receive processing content normalized by an analyzing unit on a basis of the recognition information; and an output unit configured to output response information corresponding to a processing result based on the processing content and a speech characteristic of a user. Also provided is an information processing apparatus, including: a receiving unit configured to receive recognition information based on collected speech information; an analyzing unit configured to normalize processing content on a basis of the recognition information; and a transmitting unit configured to transmit the processing content.

## Description

### Technical Field

The present disclosure relates to an information processing apparatus.

### Background Art

Recently, various apparatuses that recognize speech of a user and execute a process corresponding to a recognized voice input have been proposed. Further, techniques for taking in a range of expressions related to speech of a user and enhancing accuracy of voice recognition are known. As one of such techniques, there is, for example, a voice processing apparatus disclosed in Patent Literature 1.

### Citation List

### Patent Literature

Patent Literature 1: JP 2008-139438A

### Disclosure of Invention

### Technical Problem

However, the voice processing apparatus disclose in Patent Literature 1 does not include a means for storing expressions related to the speech of the recognized user and does not include a means for reflecting the expressions in voice synthesis, and thus it is difficult to perform a voice response corresponding to an expression used by the user.

In this regard, the present disclosure proposes an information processing apparatus which is capable of performing a more natural response corresponding to the speech of the user.

### Solution to Problem

According to the present disclosure, there is provided an information processing apparatus, including: an acquiring unit configured to collect speech information; a transmitting unit configured to transmit recognition information based on the speech information; a receiving unit configured to receive processing content normalized by an analyzing unit on a basis of the recognition information; and an output unit configured to output response information corresponding to a processing result based on the processing content and a speech characteristic of a user.

In addition, according to the present disclosure, there is provided an information processing apparatus, including: a receiving unit configured to receive recognition information based on collected speech information; an analyzing unit configured to normalize processing content on a basis of the recognition information; and a transmitting unit configured to transmit the processing content.

### Advantageous Effects of Invention

As described above, according to the present disclosure, it is possible to perform a more natural response corresponding to the speech of the user. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a conceptual diagram for describing an overview according to an embodiment of the present disclosure.
[FIG. 2] FIG. 2 is a diagram illustrating a system configuration example according to the embodiment.
[FIG. 3] FIG. 3 is a functional block diagram of an information processing terminal according to the embodiment.
[FIG. 4] FIG. 4 is a functional block diagram of an information processing server according to the embodiment.
[FIG. 5] FIG. 5 is a table example related to a speech tendency of a user retained by a user information DB according to the embodiment.
[FIG. 6] FIG. 6 is a conceptual diagram illustrating an output of response information according to a tendency of an appellation according to the embodiment.
[FIG. 7] FIG. 7 is a conceptual diagram illustrating an output of response information corresponding to tendencies of appellations of a plurality of users according to the embodiment.
[FIG. 8] FIG. 8 is a conceptual diagram illustrating an output of response information corresponding to a tendency of a word according to the embodiment.
[FIG. 9] FIG. 9 is a conceptual diagram illustrating an output example of response information corresponding to a tendency of a word order according to the embodiment.
[FIG. 10] FIG. 10 is a conceptual diagram for describing generation of response information corresponding to a word order related to a place and a date and time according to the embodiment.
[FIG. 11] FIG. 11 is a conceptual diagram illustrating an output example of response information corresponding to a tendency of a pronunciation according to the embodiment.
[FIG. 12] FIG. 12 is a sequence diagram related to operations of an information processing terminal 10 and an information processing server 30 according to the embodiment.
[FIG. 13] FIG. 13 is a sequence diagram related to operations of the information processing terminal 10 and the information processing server 30 according to the embodiment.
[FIG. 14] FIG. 14 is a sequence diagram related to operations of the information processing terminal 10 and the information processing server 30 according to the embodiment.
[FIG. 15] FIG. 15 is a hardware configuration example according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, the description will proceed in the following order.
1. Embodiment
   1.1. Overview of embodiment according to present disclosure
   1.2. System configuration example
   1.3. Function configuration example of information processing terminal 10
   1.4. Function configuration example of information processing server 30
   1.5. Output of response information corresponding to speech tendency
   1.6. Flow of operation
2. Hardware configuration example
3. Conclusion

### <1. Embodiment >

### [1.1. Overview of embodiment according to present disclosure]

In recent years, techniques for recognizing speech of a user and performing a voice response based on the speech in autonomous robots, smartphone applications, or the like have been spreading. The voice response does not distract the user visually unlike a visual output using a screen or the like. For this reason, the user can use the voice response system while performing other tasks.

For example, the user can ask the voice response system about the weather forecast of tomorrow while doing kitchen work. The user can ask the question "How will the weather be in Tokyo tomorrow?" while looking at a hand. At this time, the voice response system can recognize that a speech intention of the user is an inquiry related to the weather forecast and identifies that "Tokyo: extracted from the speech indicates a place name "Tokyo," and the similarly extracted "tomorrow" indicates time information. On the basis of the recognized speech intention or extracted parameters, the voice response system can access a weather forecast service or the like and give the answer "It will be sunny tomorrow in Tokyo."

On the other hand, in the voice response, in a case in which the user fails to hear the voice output from the system, the user is required to ask the question again. For this reason, in a case in which a word which is unable to be understood by the user or a word which is not ordinarily used by the user is included in the voice output from the system, it is difficult for the user to understand the response content correctly (and instantaneously), and it can be a major factor to deteriorate convenience of the system.

For example, a case in which the speech of the user is an inquiry related to a fee for the "Statue of Liberty" is considered. At this time, the system determines that "Statue of Liberty" indicates the official name "Liberty Enlightening the World," and performs the voice output using the official name. However, in a case in which the user does not know the official name, it is difficult for the user to determine whether or not the response from the system is a correct answer to his/her inquiry.

Further, for example, a case in which the system initiatively performs the voice output which is not the response to the inquiry from the user is considered. At this time, if the system outputs a voice message indicating that there is an event at "Liberty Enlightening the World," it is difficult for the user who does not know the official name to correctly understand the intention of the voice output.

As described above, in a case in which the system always performs the voice response using the official name or a fixed phrase, there is a possibility of understanding of the user being greatly reduced. Further, even in a case in which the response content can be understood, a case in which the user feels discomfort with the voice response using a word or the like which is not ordinarily used is assumed. For this reason, the system that performs the voice response is required to realize a response which is more easily understood and more familiar to the user.

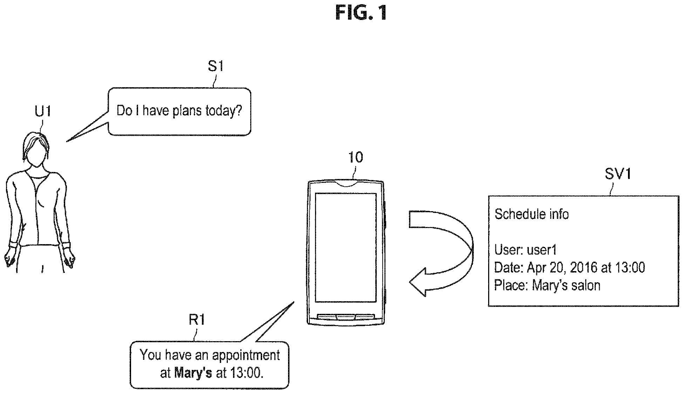

An information processing apparatus related to the present disclosure is conceived focusing on the above points and can output response information corresponding to speech characteristics of the user. Here, an overview of an embodiment according to the present disclosure will be described. FIG. 1 is a conceptual diagram for describing an overview of the present embodiment. An information processing terminal 10 that recognizes speech of the user and executes a process on the basis of the speech is illustrated in FIG. 1. Here, the information processing terminal 10 according to the present embodiment may have an agent function for realizing a voice conversation with the user.

Referring to FIG. 1, the information processing terminal 10 recognizes speech S1 of a user U1 and outputs response information R1 on the basis of the speech S1. More specifically, the information processing terminal 10 can execute various processes on the basis of a speech intention of the user extracted from the speech S1 and output a result of the process as the response information R1.

For example, the information processing terminal 10 may have a function of searching for schedule information on the basis of the speech S1 of the user U1 and outputting the response information R1 including a search result by voice. In the example illustrated in FIG. 1, the information processing terminal 10 extracts the schedule information of the user U1 from a service SV1 related to schedule management on the basis of the speech intention extracted from the speech S1 "Do I have plans today?" Further, the information processing terminal 10 outputs the response information R1 "You have an appointment at Mary's at 13:00," on the basis of the extracted schedule information.

At this time, the information processing terminal 10 according to the present embodiment is capable of outputting the response information corresponding to a speech characteristic of the user. For example, the information processing terminal 10 according to the present embodiment may have a function of outputting response information corresponding to a tendency of an appellation used by the user. Here, the tendency of the appellation may be a tendency of how the user refers to targets such as a person, an object, and a place. Therefore, the appellation according to the present embodiment may be a concept including an abbreviated name, a nickname, a popular name, and the like.

For example, the service SV1 illustrated in FIG. 1 stores the schedule information of the user U1 associated with "Mary's salon." Here, "Mary's salon" may be a commercial official name of a salon. On the other hand, in the example illustrated in FIG. 1, the information processing terminal 10 converts it into the name "Mary's" without using the official name "Mary's salon" and outputs the response information R1.

As described above, the information processing terminal 10 can output the response information R1 corresponding to the speech characteristic with reference to the stored speech characteristic of the user. In other words, the information processing terminal 10 can recognize that the user U1 tends to call "Mary's salon" "Mary's" from the stored speech characteristic of the user U1 and realize the output of the response information R1 illustrated in FIG. 1. As described above, the speech characteristic according to the present embodiment may include the speech characteristic of the user in addition to information related to an attribute of the user.

The overview according to the present embodiment has been described above. As described above, the information processing terminal 10 according to the present embodiment can output the response information corresponding to the speech characteristic of the user. According to the function of the information processing terminal 10, it is possible to realize a more natural and easily understandable voice conversation corresponding to the speech characteristic of the user.

Further, in the above description, the case in which the information processing terminal 10 responds to the speech of the user has been described as an example, but the information processing terminal 10 according to the present embodiment may perform the voice output initiated by the system. In this case, the information processing terminal 10 can perform a voice output corresponding to the speech characteristic of the user on the basis of recognized user information. In the following description, functional features related to the information processing terminal 10 and an information processing server 30 according to the present embodiment will be described, and effects obtained by the features will be described.

### [1.2. System configuration example]

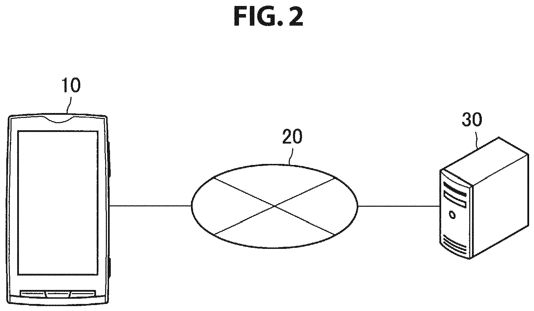

Next, a system configuration example according to the present embodiment will be described. FIG. 2 is a diagram illustrating a system configuration example according to the present embodiment. Referring to FIG. 2, the information processing system according to the present embodiment includes an information processing terminal 10 and an information processing server 30. Further, the information processing terminal 10 and the information processing server 30 are connected via a network 20 to be able to communicate with each other.

### (Information processing terminal 10)

The information processing terminal 10 according to the present embodiment has a function of collecting speech information of the user and executing various processes based on the speech information. Further, the information processing terminal has a function of outputting the response information corresponding to a result of the process and the speech characteristic of the user.

More specifically, the information processing terminal 10 according to the present embodiment may transmit recognition information based on the collected speech information of the user to the information processing server 30. Further, the information processing terminal 10 can receive processing content normalized by the information processing server 30 and execute a process based on the processing content.

The information processing terminal 10 according to the present embodiment may be any of various information processing apparatuses having the above functions. The information processing terminal 10 may be, for example, a personal computer (PC), a smartphone, a tablet, a mobile phone, an autonomous robot, or the like.

### (Information processing server 30)

The information processing server 30 according to the present embodiment is an information processing apparatus that receives recognition information based on the collected speech information and normalizes the processing content on the basis of the recognition information. More specifically, the information processing server 30 may take in differences related to the speech characteristics of each user and normalize processing content to be executed. Further, the information processing server 30 may have a function of transmitting the normalized processing content to the information processing terminal 10. Further, the normalization of the processing content performed by the information processing server 30 will be described later in detail.

### (Network 20)

The network 20 has a function of connecting the information processing terminal 10 with the information processing server 30. The network 20 may include a public line network such as the Internet, a telephone line network, or a satellite communication network, various local area networks (LANs) including Ethernet (registered trademark), a wide area network (WAN), and the like. Further, the network 20 may include a dedicated line network such as an Internet protocol-virtual private network (IP-VPN). Further, the network 20 may include a wireless communication network such as Wi-Fi (registered trademark), Bluetooth (registered trademark), or the like.

The system configuration example according to the present embodiment has been described above. Further, in the above description using FIG. 2, the case in which the information processing terminal 10 and the information processing server 30 are implemented as independent information processing apparatuses has been described as an example, but the system configuration example according to the present embodiment is not limited to this example. The information processing terminal 10 and the information processing server 30 according to the present embodiment may be implemented as a single information processing apparatus. In this case, for example, the information processing terminal 10 may further have a function related to the normalization of the processing content.

Further, the respective functions of the information processing terminal 10 and the information processing server 30 may be implemented by three or more information processing apparatuses. The system configuration example according to the present embodiment can be flexibly transformed depending on an amount of information to be handled, system specifications, operating conditions, and the like.

### [1.3. Function configuration example of information processing terminal 10]

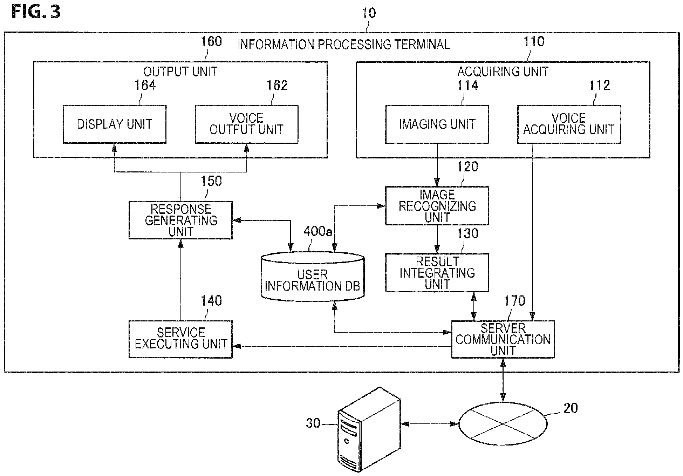

Next, a functional configuration example of the information processing terminal 10 according to the present embodiment will be described in detail. FIG. 3 is a functional block diagram of the information processing terminal 10 according to the present embodiment. Referring to FIG. 3, the information processing terminal 10 according to the present embodiment includes an acquiring unit 110, an image recognizing unit 120, a result integrating unit 130, a service executing unit 140, a response generating unit 150, an output unit 160, a server communication unit 170, and a user information DB 400a. Further, the acquiring unit 110 according to the present embodiment includes a voice acquiring unit 112 and an imaging unit 114. Further, the output unit 160 according to the present embodiment includes a voice output unit 162 and a display unit 164.

Hereinafter, the respective components mentioned above will be described in detail focusing on features of the components. Further, the functional configuration illustrated in FIG. 3 is merely an example, and some of the functions illustrated in FIG. 3 may be implemented as functions of an apparatus different from the information processing terminal 10. The functional configuration of the information processing terminal 10 according to the present embodiment can be appropriately changed depending on an apparatus characteristic, operational conditions, or the like.

### (Acquiring unit 110)

The acquiring unit 110 has a function of acquiring information related to the user. To this end, the acquiring unit 110 may include various kinds of sensors or apparatuses for detecting speech or a state of the user or an input manipulation by the user. In particular, in the present embodiment, the acquiring unit 110 may include the voice acquiring unit 112 and the imaging unit 114.

### ((Voice acquiring unit 112))

The voice acquiring unit 112 has a function of collecting the speech information of the user. Here, the speech information may include not only a voice spoken by the user but also ambient environmental sounds or the like. The voice acquiring unit 112 can be implemented by, for example, a microphone that converts the voice of the user or the environmental sounds into an electric signal.

### ((Imaging unit 114))

The imaging unit 114 has a function of collecting image information of the user. Here, the user may include a plurality of persons staying near the information processing terminal 10 such as a user who speaks to the information processing terminal 10, another user who is talking with the speaking user, and the like. The imaging unit 114 can be implemented, for example, by various kinds of cameras including an imaging element.

### (Image recognizing unit 120)

The image recognizing unit 120 has a function of recognizing the user near the information processing terminal 10 on the basis of the image information collected by the imaging unit 114 and the user information included in the user information DB 400a to be described later.

### (Result integrating unit 130)

The result integrating unit 130 has a function of associating the user information recognized by the image recognizing unit 120 with a voice recognition result recognized by a voice recognizing unit 310 to be described later. Specifically, the result integrating unit 130 according to the present embodiment can specify a speaking user who gives a speech command related to service execution. Further, the result integrating unit 130 can recognize another user different from the speaking user near the information processing terminal 10 at the same time. In other words, the result integrating unit 130 has a function of outputting recognition information in which a voice recognition result of the voice recognizing unit 310, a recognition result of the speaking user, and a recognition result of another user different from the speaking user are integrated to an analyzing unit 320 through the server communication unit 170.

### (Service executing unit 140)

The service executing unit 140 has a function of executing various processes on the basis of the processing content normalized by the analyzing unit 320 to be described later. In other words, the service executing unit 140 has a function of making various service requests on the basis of the normalized processing content. Therefore, the function executed by the service executing unit 140 can be decided depending on a type of service. In a case in which a provided service is a service related to schedule management, for example, the service executing unit 140 may refer to, register, change, or delete a schedule on the basis of, for example, the normalized processing content. Further, in a case in which the provided service is a service related to a weather forecast, the service executing unit 140 can extract corresponding information from a weather forecast service on the basis of the normalized processing content.

Further, for example, the service may be any of various kinds of applications implemented as the function of the information processing terminal 10. In this case, the service executing unit 140 may have a function of controlling management and execution of applications. Further, the service may be, for example, any of various web services published on the network 20. In this case, the service executing unit 140 can access the web service via the network 20 and request execution of functions corresponding to the service content or acquisition of information corresponding to the service content.

### (Response generating unit 150)

The response generating unit 150 has a function of generating response information corresponding to a normalized processing result and a speech characteristic of the user. In other words, the response generating unit 150 can generate response information corresponding to the processing result by the service executing unit 140 and the user information held by the user information DB 400a. In this case, the response generating unit 150 may generate response information corresponding to the speech characteristic of the speaking user included in the user information. More specifically, the response generating unit 150 can generate response information corresponding to the speech tendency of the user included in the speech characteristic. As described above, the speech characteristic according to the present embodiment may include the speech tendency of the user in addition to attribute information of the user. Here, the speech tendency may include, for example, tendencies such as an appellation, a word, a word order, and a pronunciation, used by the user. In other words, the response generating unit 150 according to the present embodiment can generate the response information corresponding to a tendency such as an appellation, a word, a word order, a pronunciation, or the like.

Further, the response generating unit 150 may generate response information corresponding to the speech characteristic of the speaking user and the speech characteristic of another user different from the speaking user. Furthermore, the response generating unit 150 may generate response information using a speech characteristic common to the speaking user and another user different from the speaking user. The generation of the response information according to the present embodiment will be described in detail later. Further, the response generating unit 150 may have a voice synthesis function of synthesizing an artificial voice on the basis of the generated the response information.

### (Output unit 160)

The output unit 160 has a function of presenting the response information generated by the response generating unit 150 to the user. In other words, the output unit 160 according to the present embodiment can output the response information corresponding to the tendency such as the appellation, the word, the word order, the pronunciation, or the like used by the user. To this end, the output unit 160 may include various kinds of apparatuses for outputting the response information. In particular, in the present embodiment, the output unit 160 may include the voice output unit 162 and the display unit 164.

### ((Voice output unit 162))

The voice output unit 162 has a function of converting an electric signal into a sound and outputting the sound. Specifically, the voice output unit 162 has a function of presenting a voice based on the voice data synthesized by the response generating unit 150 to the user. The voice output unit 162 may include a speaker, an amplifier, or the like having the above function.

### ((Display unit 164))

The display unit 164 has a function of performing an output associated with visual information on the basis of the response information generated by the response generating unit 150. The function may be implemented by, for example, a cathode ray tube (CRT) display apparatus, a liquid crystal display (LCD) apparatus, or an organic light emitting diode (OLED) apparatus. Further, the display unit 164 may have a function as a manipulating unit that receives a manipulation of the user. The function serving as the manipulating unit can be implemented by, for example, a touch panel.

### (Server communication unit 170)

The server communication unit 170 has a function of communicating with the information processing server 30 via the network 20. For example, the server communication unit 170 may transmit the speech information acquired by the voice acquiring unit 112 to the information processing server 30 and receive the voice recognition result based on the speech information. Further, the server communication unit 170 may transmit the recognition information integrated by the result integrating unit 130 to the information processing server 30 and receive the normalized processing content based on the recognition information. Here, the recognition information may include the voice recognition result, the recognition result of the speaking user, and the recognition result of another user different from the speaking user.

### (User information DB 400a)

The user information DB 400a may be a database that holds various information related to the user. The user information held in the user information DB 400a may include, for example, basic information such as a user ID and a name, a gender, an age, and the like of the user. Further, the user information may include image information or an acoustic feature identifying the user. The image recognizing unit 120 or the voice recognizing unit 310 to be described later can identify the user on the basis of the above image information or the acoustic feature. Further, the user information may include the speech characteristic of each the user. As described above, the speech characteristic may include the speech tendency of each user in addition to the attribute information such as a gender, an age, an origin, and the like of the user. The speech tendency may include the speech tendencies such as the appellation, the word, the word order, and the pronunciation used by the user.

Further, the user information held in the user information DB 400a may be controlled in synchronization with the user information held in a user information DB 400b to be described later. For example, in a case in which new user information is registered in the user information DB 400a, the user information related to the user may be copied to the user information DB 400b.

The functional configuration example of the information processing terminal 10 according to the present embodiment has been described in detail above. As described above, the information processing terminal 10 according to the present embodiment can output the response information corresponding to the service execution result and the speech characteristic of the user. More specifically, the information processing terminal 10 can output the response information corresponding to the speech tendency of the user. According to the function provided by the information processing terminal 10 according to the present embodiment, it is possible to realize a more natural and easily understandable voice conversation corresponding to the speech characteristic of the user.

Further, the functional configuration described above is merely an example, and the functional configuration of the information processing terminal 10 according to the present embodiment is not limited to this example. For example, the image recognizing unit 120, the result integrating unit 130, the service executing unit 140, and the response generating unit 150 may be implemented as functions of the information processing server 30 or other apparatuses. Further, the case in which the information processing terminal 10 includes the user information DB 400a has been described above as an example, but the user information DB 400a may be installed outside the information processing terminal 10 or may be installed to be integrated with the user information DB 400b to be described later. The functional configuration of the information processing terminal 10 according to the present embodiment can be flexibly changed.

### [1.4. Function configuration example of information processing server 30]

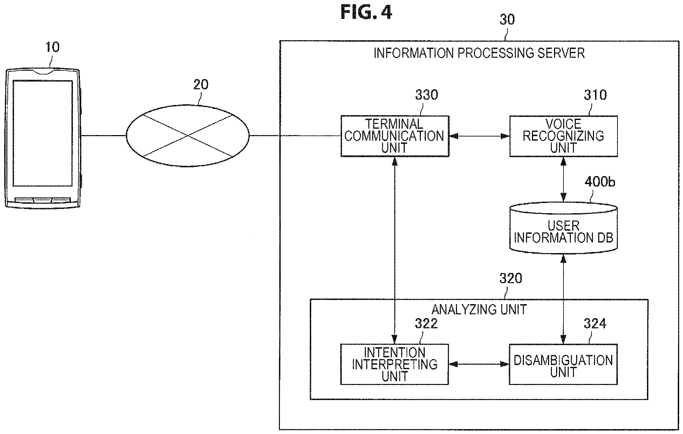

Next, the functional configuration example of the information processing server 30 according to the present embodiment will be described in detail. FIG. 4 is a functional block diagram of the information processing server 30 according to the present embodiment. Referring to FIG. 4, the information processing server 30 according to the present embodiment includes a voice recognizing unit 310, an analyzing unit 320, a terminal communication unit 330, and a user information DB 400b. Further, the analyzing unit 320 according to the present embodiment includes an intention interpreting unit 322 and a disambiguation unit 324.

Hereinafter, the respective component mentioned above will be described in detail, focusing on features of the components. Further, the functional configuration illustrated in FIG. 4 is merely an example, and some functions illustrated in FIG. 4 may be implemented as, for example, functions of the information processing terminal 10. The functional configuration of the information processing server 30 according to the present embodiment can be appropriately changed depending on an apparatus characteristic, an operating condition, or the like.

### (Voice recognizing unit 310)

The voice recognizing unit 310 has a function of performing the voice recognition on the basis of the speech information collected by the voice acquiring unit 112 of the information processing terminal 10. Specifically, the voice recognizing unit 310 may convert a voice signal included in the speech information into character string information. Further, the voice recognizing unit 310 has a function of identifying the speaking user on the basis of the acoustic feature of each user held in the user information DB 400b. In this case, the voice recognizing unit 310 can perform the voice recognition using, for example, pattern matching, a hidden Markov model, or the like.

### (Analyzing unit 320)

The analyzing unit 320 has a function of normalizing the processing content executed by the service executing unit 140 on the basis of the recognition information integrated by the result integrating unit 130 of the information processing terminal 10. In other words, the analyzing unit 320 according to the present embodiment can absorb a difference related to a speech characteristic between the users and generate the processing contents not depending on the speech characteristic of the user. To this end, the analyzing unit 320 according to the present embodiment includes the intention interpreting unit 322 and the disambiguation unit 324.

### ((Intention interpreting unit 322))

The intention interpreting unit 322 has a function of extracting the speech intention of the speaking user on the basis of the voice recognition result included in the recognition information. For example, in a case in which the user speaks "register schedule of Mary's at 1 pm today afternoon" (a speech example 1), the intention interpreting unit 322 can extract schedule registration to a schedule service as the speech intention of the speaking user. Further, at this time, the intention interpreting unit 322 has a function of extracting the speech parameter on the basis of the voice recognition result. In the case of the speech example 1, the intention interpreting unit 322 may extract "date and time: 1 pm today" and "place: Mary's" as speech parameters. In this case, the intention interpreting unit 322 may apply the above process by applying a method widely used in a field of natural language processing.

### ((Disambiguation unit 324))

The disambiguation unit 324 has a function of generating the processing content obtained by normalizing the speech parameter on the basis of the recognition result of the speaking user included in the recognition information and the speech characteristic of the speaking user stored in the user information DB 400b. In other words, the disambiguation unit 324 according to the present embodiment has a function of eliminating the ambiguity of the speech parameter depending on the speech characteristic of the speaking user.

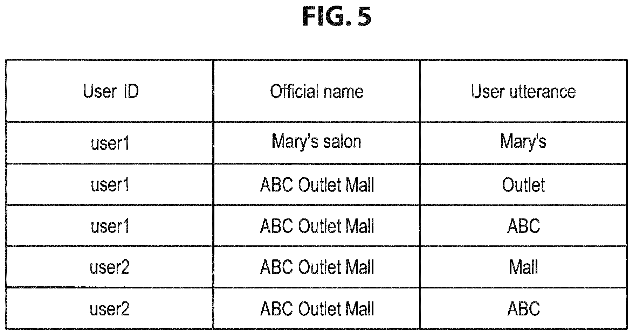

FIG. 5 is a diagram illustrating a table example related to the speech tendency of the user held in the user information DB 400b. Here, the table illustrated in FIG. 5 is an example indicating information related to the tendency of the appellation used by the user. Referring to FIG. 5, in the same table, an official name related to a target and an appellation used for the target by the user are stored in association with each other. For example, in the case of the speech example 1, the disambiguation unit 324 may search the user information DB 400b on the basis of the speech parameter "place: Mary's" extracted by the intention interpreting unit 322 and the recognition result (the user 1) of the speaking user. The disambiguation unit 324 can acquires the official name "Mary's Salon" of the speech parameter "Mary's" by the above process and replace the speech parameter. As described above, the disambiguation unit 324 according to the present embodiment can absorb the difference related to the speech characteristic between the users and generate the normalized processing content not depending on the speech characteristic of the user.

Further, the disambiguation unit 324 may eliminate the ambiguity of the speech parameter on the basis of information stored in advance. For example, in the case of the speech example 1, the disambiguation unit 324 may convert the speech parameter "date and time: 1 pm today" extracted by the intention interpreting unit 322 into "date and time: 13:00 4/20/2016" on the basis of specifications of data type used by the service. As described above, the disambiguation unit 324 according to the present embodiment can eliminate the ambiguity associated with the speech parameter extracted by the intention interpreting unit 322 and generate the normalized processing content suitable for execution of the service.

Further, the disambiguation unit 324 has a function of causing the speech tendency of the speaking user to be stored on the basis of the speech parameter extracted by the intention interpreting unit 322 and the recognition result of the speaking user. Specifically, the disambiguation unit 324 may cause the speech parameter extracted by the intention interpreting unit 322 and the ID of the speaking user to be stored in the user information DB 400b in association with each other. Further, as described above, the speech tendency may include the appellation, the word, the word order, the pronunciation, and the like. According to the function of the disambiguation unit 324, the speech tendency of the user can be collected dynamically and kept up to date.

### (Terminal communication unit 330)

The terminal communication unit 330 has a function of communicating with the information processing terminal 10 via the network 20. For example, the terminal communication unit 330 may receive the collected speech information and transmit the voice recognition result by the voice recognizing unit 310 to the information processing terminal 10. Further, the terminal communication unit 330 may receive the recognition information integrated by the result integrating unit 130 and transmit the processing content normalized on the basis of the recognition information to the information processing terminal 10.

### (User information DB 400b)

The user information DB 400b may be a database that holds various information related to the user. The user information held in the user information DB 400b may be identical to the user information held in the user information DB 400a, and thus detailed description thereof will be omitted. Further, as described above, the user information held in the user information DB 400b may be controlled in synchronization with the user information held in the user information DB 400a. For example, in a case in which a speech tendency of a new the user is registered in the user information DB 400b, information related to the speech tendency may be copied to the user information DB 400a.

The functional configuration example of the information processing server 30 according to the present embodiment has been described above in detail. As described above, the information processing server 30 according to the present embodiment can normalize the processing content related to the service execution on the basis of the recognition information and the speech characteristic of the user. Further, the information processing server 30 according to the present embodiment can store the extracted speech parameter as the speech tendency of the speaking user. According to the function provided in the information processing server 30 according to the present embodiment, it is possible to absorb the difference related to the speech characteristic between the users and realize more stable service execution.

### [1.5. Output of response information corresponding to speech tendency]

Next, an output of the response information corresponding to the speech tendency according to the present embodiment will be described in detail. As described above, the information processing terminal 10 according to the present embodiment can generate the response information corresponding to the speech tendency of the user and output the response information. Hereinafter, the above-described functions of the information processing terminal 10 according to the present embodiment will be described in detail using specific examples.

### (Output of response information corresponding to tendency of appellation)

First, the output of the response information corresponding to the tendency of the appellation according to the present embodiment will be described in detail. As described with reference to FIG. 1, the information processing terminal 10 according to the present embodiment can output the response information corresponding to the tendency of the appellation used by the recognized speaking user. Further, in the description using FIG. 1, the case in which the speaking user refers to the schedule information related to the speaking user has been described as an example. On the other hand, the information processing terminal 10 according to the present embodiment may output the response information corresponding to the tendency of the appellation of the speaking user even in a case in which the speaking user refers to the schedule information of another user.

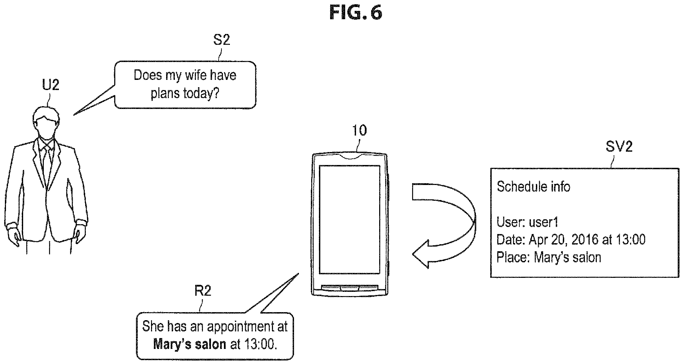

FIG. 6 is a conceptual diagram illustrating an example of the output of the response information in a case in which the speaking user refers to the schedule information related to another user. Here, FIG. 6 illustrates an example in which a user U2 refers to schedule information of a wife (a user 1). At this time, the information processing terminal 10 transmits speech S2 of the user U2 and the recognition information based on the acquired image information of the user U2 to the information processing server 30. Here, the analyzing unit 320 of the information processing server 30 extracts the speech intention and the speech parameters from the speech S2, and normalizes processing content. Specifically, the disambiguation unit 324 can convert the speech parameter "my wife" into "user 1" on the basis of the recognition result and the speech tendency of the user S2. Further, the disambiguation unit 324 may convert the speech parameter "today" on the basis of a service specification.

Then, the service executing unit 140 of the information processing terminal 10 acquires the schedule information of the user 1 from a service SV2 on the basis of the processing content normalized by the information processing server 30. At this time, in the acquired schedule information, the official name "Mary's salon" is used as the place information.

Then, the response generating unit 150 of the information processing terminal 10 generates the response information on the basis of the acquisition result and the speech tendency of the user U2. At this time, the information processing terminal 10 may search for the tendency of the appellation used for "Mary's salon" by the user U2 from the user information DB 400a and generate the response information corresponding to the search result. Here, referring again to the table example in FIG. 5, it can be seen that the user information DB 400a does not store the appellation used for "Mary's salon" by the user U2 (the user 2). On the other hand, at this time, in a case in which the response generating unit 150 generates the response information using "Mary's" which is the appellation used by the user 1, content of the response information is unlikely to be accurately understood by the user U2 (the user 2). For this reason, the response generating unit 150 generates response information R2 using the official name "Mary's salon" without change, and the voice output unit 162 outputs the response information R2. Further, at this time, the response generating unit 150 can change a preposition or the like in accordance with the selected official name or appellation. The generation of the response information by the response generating unit 150 can be appropriately changed depending on a characteristic of a used language.

As described above, the information processing terminal 10 according to the present embodiment can output the response information corresponding to the tendency of the appellation used by the recognized speaking user. According to the function provided in the information processing terminal 10 according to the present embodiment, it is possible to output the flexible response information corresponding to the speaking user even for the same processing result such as the acquisition result for the schedule information.

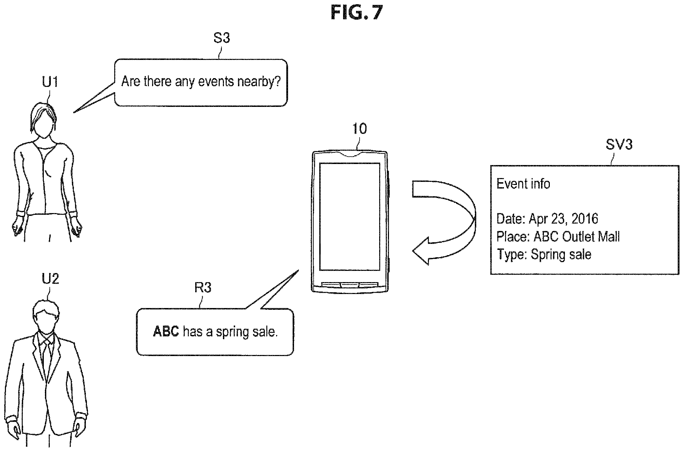

Next, another example of generating the response information corresponding to the tendency of the appellation according to the present embodiment will be described with reference to FIG. 7. In the example illustrated in FIG. 7, in addition to the user U1 who is the speaking user, the user 2 who is another user stays near the information processing terminal 10. As described above, the image recognizing unit 120 of the information processing terminal 10 according to the present embodiment can identify the user U2 on the basis of the image information acquired by the imaging unit 114.

In the example illustrated in FIG. 7, the user U1 performs speech S3 "Are there any events nearby?" related to an inquiry about event information in a nearby area. At this time, the information processing terminal 10 can include GPS information acquired by the acquiring unit 110 in the recognition information and transmit the resulting recognition information to the information processing server 30. In this case, the information processing server 30 can convert the extracted speech parameter "nearby" into coordinate information and normalize the processing content.

Then, the service executing unit 140 of the information processing terminal 10 acquires the event information from a service SV3 on the basis of the normalized processing content. At this time, in the acquired event information, an official name "ABC Outlet Mall" is used as the place information.

Then, the response generating unit 150 of the information processing terminal 10 generates the response information based on the acquisition result and the speech tendencies of the users U1 and U2. At this time, the information processing terminal 10 may search for the tendencies of the appellations used for "ABC Outlet Mall" by the user U1 and the user U2 from the user information DB 400a and generate the response information corresponding to the search result. Here, referring again to the table example in FIG. 5, it can be understood that the user U1 (the user 1) uses appellations such as "Outlet" and "ABC" for "ABC Outlet Mall." Further, it can be understood that the user U2 (the user 2) uses appellations such as "Mall" and "ABC" for "ABC Outlet Mall." In this case, the response generating unit 150 may generate response information R3 using "ABC" which is common to the users U1 and U2.

As described above, the information processing terminal 10 according to the present embodiment can output the response information corresponding to the tendencies of the appellations used by the recognized speaking user and another user different from the speaking user. According to the function provided in the information processing terminal 10 according to the present embodiment, it is possible to absorb the difference in the speech characteristic among a plurality of the users and output more general response information.

Further, in the above description, the case in which the response information is generated using appellation common to the two users has been described as an example, but in a case in which a plurality of the users are recognized, the response generating unit 150 can generate the response information using the official name. Further, in a case in which three or more the users are recognized, the response generating unit 150 may generate the response information using an appellation which is used by more persons. Further, the response generating unit 150 can randomly select the appellation used by the recognized the user and generate the response information. The generation of the response information corresponding to the tendency of the appellation according to the present embodiment can be flexibly changed.

The case in which the information processing terminal 10 outputs the response information obtained by absorbing the difference related to the tendency of the appellation between different users has been described above with reference to FIGS. 6 and 7. On the other hand, as illustrated in FIG. 1, the information processing terminal 10 according to the present embodiment obtains similar effects even in a case in which the number of users is one.

Here, an example in which the service executing unit 140 executes a process related to a music replay service will be described. At this time, in a case in which the speaking user speaks "play song of abbreviated name A" using an abbreviated name related to a musician A (hereinafter referred to as an abbreviated name A), the disambiguation unit 324 convert the abbreviated name A into the musician A which is the official name with reference to general knowledge. Here, for example, the general knowledge may be information stored in the information processing server 30 or may be information published on the Internet. Further, at this time, the disambiguation unit 324 stores information indicating that the speaking user uses the abbreviated name A for the musician A in the user information DB 400b.

In this case, the information processing terminal 10 can reproduce music related to the musician A and output the response information "music of abbreviated name A is replayed." Further, in a case in which the user performs speech related to the musician A afterwards, the information processing terminal 10 may output the response information corresponding to the tendency of the appellation stored above. For example, in a case in which the user speaks "who's song is this song?" for a song of musician A being replayed, the response generating unit 150 can give a response "song of abbreviated name A" with reference to the tendency of the appellation of the user stored in the user information DB 400b.

### (Output of response information corresponding to tendency of word)

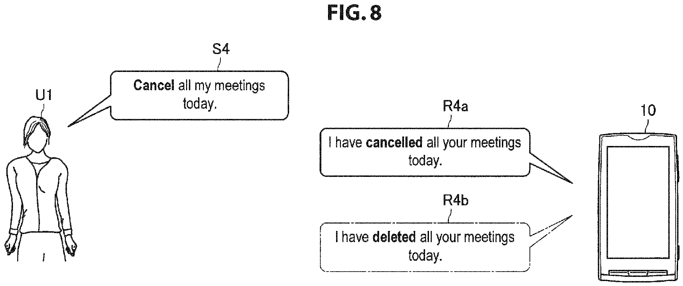

Next, an output of the response information corresponding to the tendency of the word according to the present embodiment will be described in detail. The information processing terminal 10 according to the present embodiment can output the response information corresponding to the tendency of the word used by the recognized speaking user. FIG. 8 is a conceptual diagram illustrating an output example of the response information corresponding to the tendency of the word used by the speaking user. Further, the following description will proceed with differences from the output of the response information corresponding to the tendency of the appellation, and description of the functions common to the information processing terminal 10 and the information processing server 30 will be omitted.

In the example illustrated in FIG. 8, the user U1 performs speech S4 "Cancel all my Meetings today" related to deletion of the schedule information. In this case, the intention interpreting unit 322 of the information processing server 30 extracts information indicating that the speech intention of the speech S4 is deletion of the schedule information and extracts the speech parameter "Cancel." Further, at this time, the disambiguation unit 324 may store the extracted speech intention and the speech parameter "Cancel" in the user information DB 400b in association with each other.

Then, the service executing unit 140 of the information processing terminal 10 executes a process related to the deletion of the schedule on the basis of the processing content normalized by the information processing server 30. Then, the response generating unit 150 generates the response information on the basis of the stored speech tendency of the user U1. In this case, the response generating unit 150 may generate response information R4a using the word "Cancel" stored above. On the other hand, at this time, in a case in which the response generating unit 150 generates response information R4b using a synonym (Delete, Eliminate, Remove, or the like) which is not used by the user U1, it is likely to be a response giving discomfort to the user U1.

As described above, the information processing terminal 10 according to the present embodiment can realize a response more natural to the speaking user by outputting the response information corresponding to the tendency of the word used by the speaking user. Further, the example related to the deletion of the schedule has been described above, but a similar process may be performed for change (Edit, Correct, or Change) or registration (Add or change) of the schedule.

Further, the example related to the synonym has been described above, but the information processing terminal 10 according to the present embodiment can similarly generate the response information using words used by the user even for synonyms. For example, in a case in which the user uses a word "Movie," the response generating unit 150 may generate the response information using "Movie" used by the user without using a synonym "Film." Further, the tendency of the word according to the present embodiment may include a usage tendency related to a verb or a gerund. For example, in a case in which the user speaks using a gerund, the response generating unit 150 can generate the response information using a gerund without using a verb. The generation of the response information corresponding to the tendency of the word according to the present embodiment can be appropriately modified depending on a characteristic of a used language.

### (Output of the response information corresponding to tendency of word order)

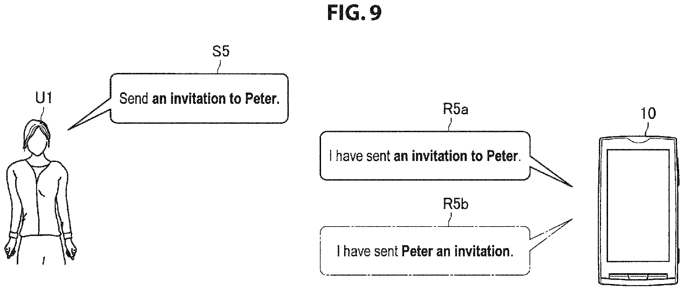

Next, an output of the response information corresponding to the tendency of the word order according to the present embodiment will be described in detail. The information processing terminal 10 according to the present embodiment can output the response information corresponding to the tendency of the word order used by the recognized speaking user. FIG. 9 is a conceptual diagram illustrating an output example of the response information corresponding to the tendency of the word order used by the speaking user. Further, the following description will proceed with differences from the output of the response information corresponding to the tendencies of the appellation and the word, and description of the functions common to the information processing terminal 10 and the information processing server 30 will be omitted.

In the example illustrated in FIG. 9, the user U1 performs speech S5 "Send an invitation to Peter" related to transmission of an invitation card. In this case, the intention interpreting unit 322 of the information processing server 30 extracts information indicating that the speech intention of the speech S5 is transmission of an invitation card and extracts the speech parameters "invitation" and "Peter (target)" and the word order of the speech parameters. Further, at this time, the disambiguation unit 324 may store the extracted speech intention and the word order of the speech parameter in the user information DB 400b in association with each other.

Then, the service executing unit 140 of the information processing terminal 10 executes a process related to the transmission of the invitation card on the basis of the processing content normalized by the information processing server 30. Then, the response generating unit 150 generates the response information on the basis of the stored speech tendency of the user U1. In this case, the response generating unit 150 may generate response information R5a using the word order of the speech parameters stored above. On the other hand, at this time, in a case in which the response generating unit 150 generates response information R5b using a word order which is not used by the user U1, it is likely to be a response giving discomfort to the user U1.

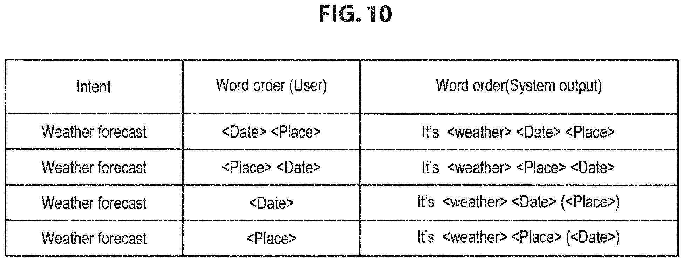

As described above, the response generating unit 150 according to the present embodiment can generate the response information corresponding to a tendency of a language used by the user. Further, the example related to the word order of an object has been described above, but the word order according to the present embodiment may include, for example, a word order related to a place and a date and time. FIG. 10 is a conceptual diagram for describing the generation of the response information corresponding to the word order related to the place and the date and time. In FIG. 10, the word order used by the user regarding the speech intention "Weather forecast" and the generated response information are illustrated in association with each other.

For example, a word order template applied in a case in which the user uses a word order of <date and time> <place> such as "What's the weather today in Tokyo" is illustrated in a first line of FIG. 10. At this time, the response generating unit 150 may search the user information DB 400a on the basis of the word order used by the user and generate, for example, the response information "It's sunny today in Tokyo" using the retrieved template.

Further, a word order template in a case in which the user omits a vocabulary is illustrated in third and fourth lines of FIG. 10. For example, in a case in which the user speaks without "<place>" such as "What's the weather today," the response generating unit 150 may extract a corresponding word order template and generate response information in which <place> is omitted similarly to the user. Alternatively, as illustrated in FIG. 10, the response generating unit 150 can generate the response information by supplementing information omitted by the user. In this case, the response generating unit 150 may generate the response information in which <place> is supplemented on the basis of <place> set by the user in advance or the GPS information included in the recognition information. Further, at this time, the information processing terminal 10 may cause the voice output unit 162 to output brief response information in which <place> is omitted while causing the display unit 164 to output the response information in which <place> is supplemented.

As described above, the information processing terminal 10 according to the present embodiment can realize the response more natural to the speaking user by outputting the response information corresponding to the tendency of the word order used by the speaking user. Further, the word order related to the object and the word order related to the place or the time have been described above as an example, but the generation of the response information corresponding to the tendency of the word order according to the present embodiment can be appropriately changed depending on a characteristic of a used language.

### (Output of response information corresponding to tendency of word)

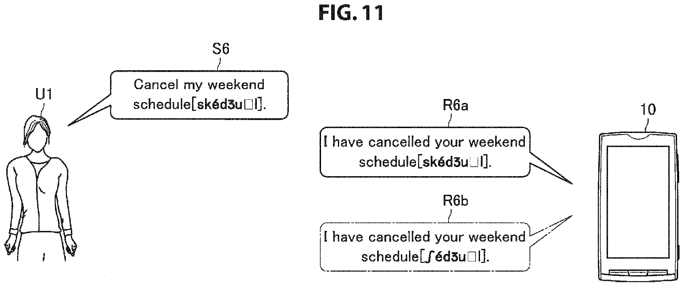

Next, an output of the response information corresponding to the tendency of the pronunciation according to the present embodiment will be described in detail. The information processing terminal 10 according to the present embodiment can output the response information corresponding to the tendency of the pronunciation used by the recognized speaking user. FIG. 11 is a conceptual diagram illustrating an output example of the response information corresponding to the tendency of the pronunciation used by the speaking user. Further, the following description will proceed with differences from output of the response information corresponding to the tendencies of the appellation, the word, and the word order, and description of the functions common to the information processing terminal 10 and the information processing server 30 will be omitted.

In the example illustrated in FIG. 11, the user U1 performs speech S6 "Cancel my weekend schedule" related to deletion of the schedule information. In this case, the intention interpreting unit 322 of the information processing server 30 extracts information indicating that the speech intention of the speech S4 is deletion of the schedule information and extracts the speech parameter "Schedule" and the pronunciation of the user related to the speech parameter. Further, at this time, the disambiguation unit 324 may store the extracted speech parameter "Schedule" and the pronunciation of the user in the user information DB 400b in association with each other.

Then, the service executing unit 140 of the information processing terminal 10 executes a process related to the deletion of the schedule on the basis of the processing content normalized by the information processing server 30. Then, the response generating unit 150 generates the response information on the basis of the stored speech tendency of the user U1. In this case, the response generating unit 150 may generate response information R6a by using the pronunciation associated with "Schedule" stored above. On the other hand, in this case, in a case in which the response generating unit 150 generates response information R6b using a pronunciation which is not used by the user U1, it is likely to be a response giving discomfort to the user U1.

As described above, the information processing terminal 10 according to the present embodiment can realize the response more natural to the speaking user by outputting the response information corresponding to the tendency of the pronunciation used by the speaking user. Further, the pronunciation on "Schedule" has been described above as an example, but the response generating unit 150 according to the present embodiment can generate, for example, response information corresponding to a rhotic. Further, in a case in which the tendency of the pronunciation used by the user is not stored, the response generating unit 150 may generate the response information with reference to a place of birth or the like of the user included in the speech characteristic of the user. According to the function provided in the information processing terminal 10 according to the present embodiment, it is possible to more flexibly realize the output of the response information corresponding to the tendency of the pronunciation depending on a region or an individual.

### [1.6. Flow of operation]

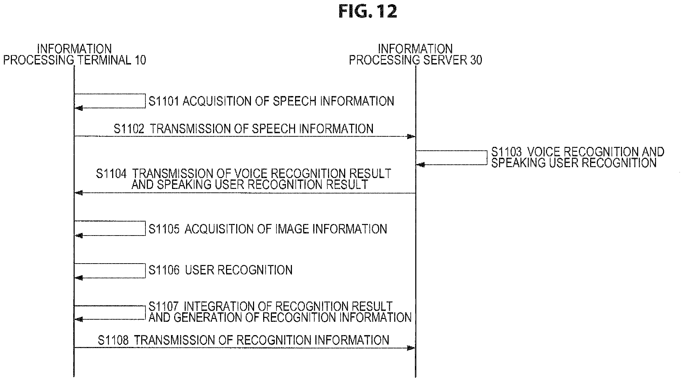

Next, the flow of operations by the information processing terminal 10 and the information processing server 30 according to the present embodiment will be described. FIGS. 12 to 14 are sequence diagrams related to the operations of the information processing terminal 10 and the information processing server 30 according to the present embodiment.

Referring to FIG. 12, first, the voice acquiring unit 112 of the information processing terminal 10 acquires the speech information of the speaking user (S1101). Then, the server communication unit 170 transmits the speech information acquired in step S1101 to the information processing server 30 (S1102).

Next, the voice recognizing unit 310 of the information processing server 30 performs the voice recognition and identifying of the speaking user on the basis of the received speech information (S1103). Then, the terminal communication unit 330 transmits the voice recognition result recognized in step S1103 and the recognition result of the speaking user to the information processing terminal 10 (S1104).

Further, the imaging unit 114 of the information processing terminal 10 acquires the image information of the user staying near the information processing terminal 10 (S1105). Then, the image recognizing unit 120 identifies the user on the basis of the image information acquired in step S1105 (S1106). Further, the process of steps S1105 and S1106 may be performed in parallel with the process of steps S1101 to S1104.

Then, the result integrating unit 130 of the information processing terminal 10 integrates the recognition results acquired in steps S1104 and S1106, and generates the recognition information (S1107). In this case, the recognition information may include the voice recognition result, the recognition result of the speaking user, and the recognition result of another user different from the speaking user. The server communication unit 170 transmits the recognition information generated in step S1107 to the information processing server 30 (S1108).

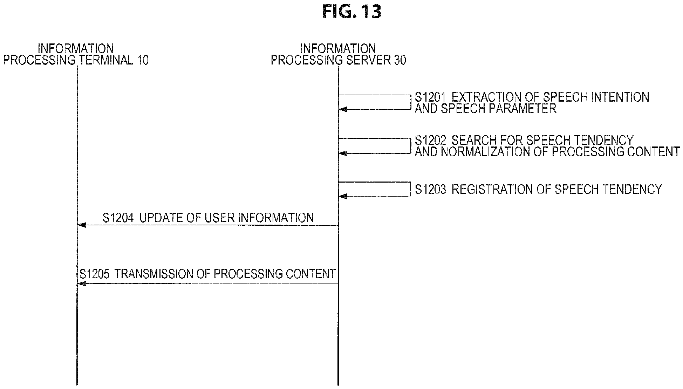

Next, the flow of operations of the information processing terminal 10 and the information processing server 30 according to the present embodiment will be described subsequently with reference to FIG. 13.

Upon completion of the process of step S1108 in FIG. 12, the intention interpreting unit 322 of the information processing server 30 extracts the speech intention and the speech parameter on the basis of the voice recognition result included in the received recognition information (S1201). Then, the disambiguation unit 324 searches the user information DB 400b on the basis of the recognition result of the speaking user included in the recognition information and the speech intention and the speech parameter extracted in step S1201, and normalizes the processing content (S1202).

Then, the disambiguation unit 324 may cause the speech tendency of the speaking user to be stored in the user DB 400b on the basis of the recognition result of the speaking user and the speech parameter extracted in step S1201 (S1203). Further, at this time, the user information DB 400b can copy information related to a speech tendency of a newly registered user to the user information DB 400a (S1204).

Then, the terminal communication unit 330 of the information processing server 30 transmits the processing content normalized in step S1202 to the information processing terminal 10 (S1205).

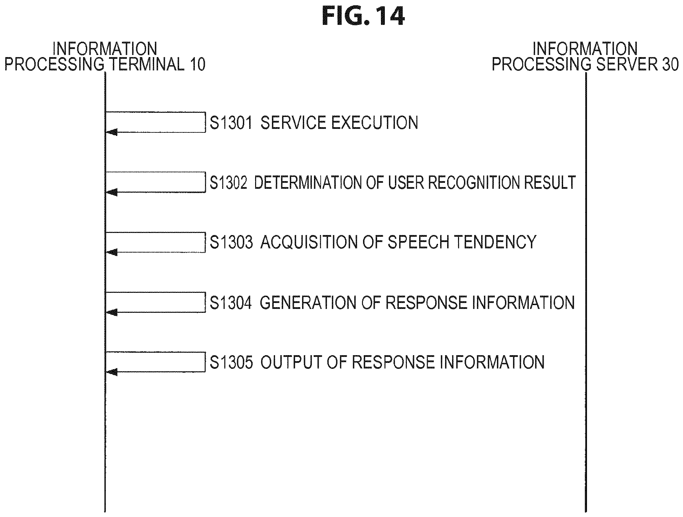

Next, the flow of the operations of the information processing terminal 10 and the information processing server 30 according to the present embodiment will be described subsequently with reference to FIG. 14.

Upon completion of the process of step S1205 in FIG. 13, the service executing unit 140 of the information processing terminal 10 executes a service based on the received processing content (S1301).

Then, the response generating unit 150 of the information processing terminal 10 determines the user recognition result on the basis of the recognition information generated in step S1107 (S1302). In this case, the response generating unit 150 may determine whether or not another user different from the speaking user is recognized.

Then, the response generating unit 150 acquires the speech tendency of the user from the user information DB 400a on the basis of the determination result in step S1302 (S1303). In this case, in a case in which it is determined in step S1302 that another user is recognized, the response generating unit 150 may acquire the speech tendency of another user in addition to the speech tendency of the speaking user.

Then, the response generating unit 150 generates the response information on the basis of the speech tendency acquired in step S1303 (S1304). Then, the voice output unit 162 and the display unit 164 of the information processing terminal 10 output the response information on the basis of the response information generated in step S1304 (step S1305), and the process ends.

### <2. Hardware configuration example>

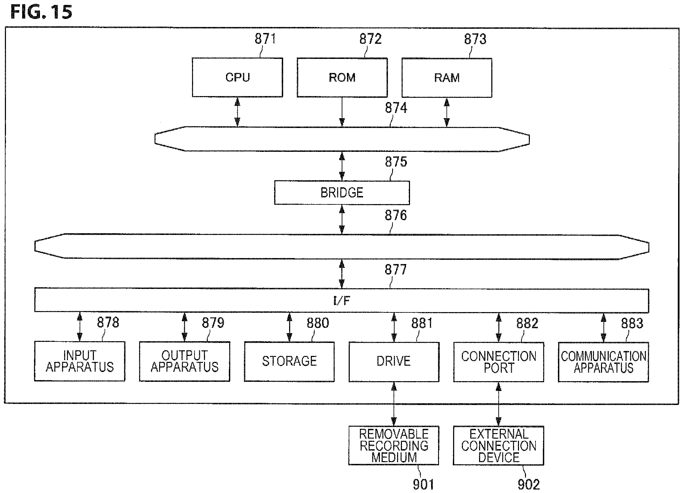

Next, a hardware configuration example common to the information processing terminal 10 and the information processing server 30 according to the present disclosure will be described. FIG. 15 is a block diagram illustrating a hardware configuration example of each of the information processing terminal 10 and the information processing server 30 according to the present disclosure. Referring to 15, each of the information processing terminal 10 and the information processing server 30 include, for example, a CPU 871, a ROM 872, a RAM 873, a host bus 874, a bridge 875, an external bus 876, an interface 877, an input apparatus 878, an output apparatus 879, a storage 880, a drive 881, a connection port 882, and a communication apparatus 883. Further, the hardware configuration illustrated here is an example, and some of the components may be omitted. Further, components other than the components illustrated here may be further included.

### (CPU 871)

The CPU 871 functions as, for example, an operation processing apparatus or a control apparatus, and controls all or some of operations of the components on the basis of various kinds of programs recorded in the ROM 872, the RAM 873, the storage 880, or a removable recording medium 901.

### (ROM 872 and RAM 873)

The ROM 872 is a device that stores a program read into the CPU 871, data used for operations, and the like. The RAM 873 temporarily or permanently stores, for example, a program to be read into the CPU 871, various kinds of parameters appropriately changing when the program is executed, and the like.

### (host bus 874, bridge 875, external bus 876, and interface 877)

The CPU 871, the ROM 872, and the RAM 873 are connected to one another via, for example, the host bus 874 by which high-speed data transmission can be performed. On the other hand, the host bus 874 is connected to the external bus 876 having a relatively low data transmission speed, for example, via the bridge 875. Further, the external bus 876 is connected to various components via the interface 877.

### (Input apparatus 878)

For example, a mouse, a keyboard, a touch panel, a button, a switch, a lever, or the like are used as the input apparatus 878. Further, as the input apparatus 878, a remote controller (hereinafter referred to as a remote controller) capable of transmitting a control signal using infrared rays or other radio waves may be used.

### (Output apparatus 879)

The output apparatus 879 is, for example, a display apparatus such as a cathode ray tube (CRT), an LCD, or an organic EL, an audio output apparatus such as a speaker or a headphone, or an apparatus capable of notifying the user of acquired information visually or audibly such as a printer, a mobile phone, or a facsimile.

### (Storage 880)

The storage 880 is an apparatus that stores various kinds of data. As the storage 880, for example, a magnetic storage device such as a hard disk drive (HDD), a semiconductor storage device, an optical storage device, a magneto-optical storage device, or the like is used.

### (Drive 881)

For example, the drive 881 is an apparatus that reads information recorded in the removable recording medium 901 such as a magnetic disk, an optical disk, a magneto-optical disk, a semiconductor memory, or the like or writes information in the removable recording medium 901.

### (Removable recording medium 901)

The removable recording medium 901 is, for example, a DVD medium, a Blu-ray (registered trademark) medium, an HD DVD medium, various semiconductor storage media, and the like. Of course, the removable recording medium 901 may be, for example, an IC card equipped with a noncontact type IC chip, an electronic device, or the like.

### (Connection port 882)

For example, the connection port 882 is a port for connecting an external connection device 902 such as a universal serial bus (USB) port, an IEEE 1394 port, a small computer system interface (SCSI), an RS-232C port, or an optical audio terminal.

### (External connection device 902)

The external connection device 902 is, for example, a printer, a portable music player, a digital camera, a digital video camera, an IC recorder, or the like.

### (Communication apparatus 883)

The communication apparatus 883 is a communication device that establishes a connection with a network and may be, for example, a communication card for a wired or wireless LAN, Bluetooth (registered trademark), or a wireless USB (WUSB), an optical communication router, an asymmetric digital subscriber line (ADSL) router, modems for various kinds of communications, or the like.

### <3. Conclusion>

As described above, the information processing terminal 10 according to the present disclosure can output the response information corresponding to the service execution result and the speech characteristic of the user. More specifically, the information processing terminal 10 can output the response information corresponding to the speech tendency of the user. Further, the information processing server 30 according to the present disclosure can normalize the processing content related to the service execution on the basis of the recognition information and the speech characteristic of the user. Further, the information processing server 30 according to the present disclosure can store the extracted speech parameter as the speech tendency of the speaking user. According to this configuration, it is possible to perform a more natural response corresponding to the speech of the user.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus, including:
   an acquiring unit configured to collect speech information;
   a transmitting unit configured to transmit recognition information based on the speech information;
   a receiving unit configured to receive processing content normalized by an analyzing unit on a basis of the recognition information; and
   an output unit configured to output response information corresponding to a processing result based on the processing content and a speech characteristic of a user.
(2) The information processing apparatus according to (1), in which the recognition information includes a voice recognition result based on the speech information and a recognition result of a speaking user.
(3) The information processing apparatus according to (2),
   in which the speech characteristic includes a speech tendency of the user, and
   the output unit outputs response information corresponding to the speech tendency of the speaking user.
(4) The information processing apparatus according to (3),
   in which the speech tendency includes a tendency of an appellation used by the user, and
   the output unit outputs response information corresponding to the tendency of the appellation.
(5) The information processing apparatus according to (3) or (4),
   in which the speech characteristic includes a tendency of a word used by the user, and
   the output unit outputs response information corresponding to the tendency of the word.
(6) The information processing apparatus according to any one of (3) to (5),
   in which the speech characteristic includes a tendency of a word order used by the user, and
   the output unit outputs response information corresponding to the tendency of the word order.
(7) The information processing apparatus according to any one of (3) to (6),
   in which the speech characteristic includes a pronunciation tendency of the user, and
   the output unit outputs response information corresponding to the pronunciation tendency.
(8) The information processing apparatus according to any one of (2) to (7),
   in which the acquiring unit further collects image information of the user,
   the transmitting unit transmits recognition information based on the speech information and the image information to the analyzing unit, and
   the recognition information further includes a recognition result of another user different from the speaking user.
(9) The information processing apparatus according to (8), in which the output unit outputs response information corresponding to the speech characteristic of the speaking user and the speech characteristic of the other user.
(10) The information processing apparatus according to (9), in which the output unit outputs response information using a speech characteristic common to the speaking user and the other user.
(11) The information processing apparatus according to any one of (1) to (10), further including
   a response generating unit configured to generate the response information corresponding to the processing result based on the processing content and the speech characteristic of the user.
(12) The information processing apparatus according to any one of (1) to (11), further including
   a service executing unit configured to execute processing based on the processing content.
(13) Server
   An information processing apparatus, including:
   a receiving unit configured to receive recognition information based on collected speech information;
   an analyzing unit configured to normalize processing content on a basis of the recognition information; and
   a transmitting unit configured to transmit the processing content.
(14) The information processing apparatus according to (13),
   in which the analyzing unit includes an intention interpreting unit and a disambiguation unit,
   the intention interpreting unit extracts a speech intention and a speech parameter of a speaking user on a basis of a voice recognition result included in the recognition information, and
   the disambiguation unit generates the processing content by normalizing the speech parameter on a basis of a recognition result of the speaking user included in the recognition information and a stored speech characteristic of the speaking user.
(15) The information processing apparatus according to (14), in which the disambiguation unit causes a speech tendency of the speaking user to be stored on a basis of the speech parameter extracted by the intention interpreting unit and the recognition result of the speaking user.
(16) The information processing apparatus according to (15), in which the speech tendency includes at least one of an appellation, a word, a word order, or a pronunciation.
(17) The information processing apparatus according to any one of (14) to (16), further including
   a voice recognizing unit configured to perform voice recognition and recognition of the speaking user on a basis of the speech information.

### Reference Signs List

- 10: information processing terminal
- 110: acquiring unit
- 112: voice acquiring unit
- 114: imaging unit
- 120: image recognizing unit
- 130: result integrating unit
- 140: service executing unit
- 150: response generating unit
- 160: output unit
- 162: voice output unit
- 164: display unit
- 170: server communication unit
- 20: network
- 30: information processing server
- 310: voice recognizing unit
- 320: analyzing unit
- 322: intention interpreting unit
- 324: disambiguation unit
- 330: terminal communication unit
- 400a, 400b: user information DB

## Claims

1. An information processing apparatus, comprising:
an acquiring unit configured to collect speech information;
a transmitting unit configured to transmit recognition information based on the speech information;
a receiving unit configured to receive processing content normalized by an analyzing unit on a basis of the recognition information; and
an output unit configured to output response information corresponding to a processing result based on the processing content and a speech characteristic of a user.

2. The information processing apparatus according to claim 1, wherein the recognition information includes a voice recognition result based on the speech information and a recognition result of a speaking user.

3. The information processing apparatus according to claim 2,
wherein the speech characteristic includes a speech tendency of the user, and
the output unit outputs response information corresponding to the speech tendency of the speaking user.

4. The information processing apparatus according to claim 3,
wherein the speech tendency includes a tendency of an appellation used by the user, and
the output unit outputs response information corresponding to the tendency of the appellation.

5. The information processing apparatus according to claim 3,
wherein the speech characteristic includes a tendency of a word used by the user, and
the output unit outputs response information corresponding to the tendency of the word.

6. The information processing apparatus according to claim 3,
wherein the speech characteristic includes a tendency of a word order used by the user, and
the output unit outputs response information corresponding to the tendency of the word order.

7. The information processing apparatus according to claim 3,
wherein the speech characteristic includes a pronunciation tendency of the user, and
the output unit outputs response information corresponding to the pronunciation tendency.

8. The information processing apparatus according to claim 2,
wherein the acquiring unit further collects image information of the user,
the transmitting unit transmits recognition information based on the speech information and the image information to the analyzing unit, and
the recognition information further includes a recognition result of another user different from the speaking user.

9. The information processing apparatus according to claim 8, wherein the output unit outputs response information corresponding to the speech characteristic of the speaking user and the speech characteristic of the other user.

10. The information processing apparatus according to claim 9, wherein the output unit outputs response information using a speech characteristic common to the speaking user and the other user.

11. The information processing apparatus according to claim 1, further comprising
a response generating unit configured to generate the response information corresponding to the processing result based on the processing content and the speech characteristic of the user.

12. The information processing apparatus according to claim 1, further comprising a service executing unit configured to execute processing based on the processing content.

13. An information processing apparatus, comprising:
a receiving unit configured to receive recognition information based on collected speech information;
an analyzing unit configured to normalize processing content on a basis of the recognition information; and
a transmitting unit configured to transmit the processing content.

14. The information processing apparatus according to claim 13,
wherein the analyzing unit includes an intention interpreting unit and a disambiguation unit,
the intention interpreting unit extracts a speech intention and a speech parameter of a speaking user on a basis of a voice recognition result included in the recognition information, and
the disambiguation unit generates the processing content by normalizing the speech parameter on a basis of a recognition result of the speaking user included in the recognition information and a stored speech characteristic of the speaking user.

15. The information processing apparatus according to claim 14, wherein the disambiguation unit causes a speech tendency of the speaking user to be stored on a basis of the speech parameter extracted by the intention interpreting unit and the recognition result of the speaking user.

16. The information processing apparatus according to claim 15, wherein the speech tendency includes at least one of an appellation, a word, a word order, or a pronunciation.

17. The information processing apparatus according to claim 14, further comprising
a voice recognizing unit configured to perform voice recognition and recognition of the speaking user on a basis of the speech information.
